# EUROPEAN PATENT SPECIFICATION

(11) **EP 0 369 925 B1**
(45) Date of publication and mention of the grant of the patent: **10.08.1994**
(21) Application number: 89600023.9
(22) Date of filing: 09.11.1989
(51) Int. Cl.: B62M 11/06, B62M 11/00

(54) **System of bicycle motion transmission**
Übersetzungsgetriebe für ein Fahrrad
Transmission pour bicyclette

(30) Priority: 17.11.1988 GR 88100777
(43) Date of publication of application: 23.05.1990
(73) Proprietor: Mantzoutsos, Vasilios, GR-27052 S.S. Vardas (GR)
(72) Inventor: Mantzoutsos, Vasilios, GR-27052 S.S. Vardas (GR)

(56) References cited:
- CH-A- 187 002
- FR-A- 1 095 117
- FR-A- 1 334 664
- FR-A- 2 600 965
- GB-A- 2 138 894
- US-A- 2 688 887
- PRODUCT ENGINEERING vol. 900, no. 32, 17 April 1961, pages 64 - 65; SLEGEL L.:"1-WAY OUTPUT FROM SPEED REDUCERS"
- IBM TECHNICAL DISCLOSURE BULLETIN. vol. 15, no. 2, July 1972, NEW YORK US page609 ARRINGTON W.M.: "DRIVE MECHANISM"

## Description

The present invention relates to bicycle motion transmission system allowing the sprocket wheel to rotate in a first direction when pedals axle rotates in the first direction and when the pedals axle rotates in a direction opposite to the first direction .

Bicycles are given motion by rotating the pedals in a first direction and when the pedals are rotated in an opposite to the first direction then the pedals rotate without transmiting motion to the bicycle . A Bicycle bearing a fully enclosed four speed gearbox (GB-A- 2138894) works likewise i.e. when the pedals axle rotates in a first direction the sprocket wheel rotates in the first direction and when the pedals axle rotates in an opposite to the first direction the sprocket wheel rotates in an opposite to the first direction.

"Product Engineering" from April 17, 1961 (p.65) shows in Figure 5 a transmission comprising a rotatable input axle carrying two gearwheels on one-way mechanisms; said gearwheels having external teeth. These gearwheels mesh with two gearwheels on an output axle; an additional gearwheel being interposed between one of the gearwheels on the input axle and one of the gearwheels on the output axle. Figure 4 on p. 65 shows two bevel gear wheels mounted on an output axle on roller clutches, whereby one of the clutches catches in one direction and the other clutch catches in the opposite direction. An input axle is provided with a bevel gear pinion which meshes with the bevel gear wheels.

The purpose served by the invention , as described is that the sprocket wheel rotates in a first direction when the pedals axle rotates in the first direction and when the pedals axle rotates in a direction opposite to the first direction , so as to allow a choice of pedals axle rotation direction without altering rotation direction of the sprocket wheel .

The main advantages of this invention are that the cyclist activates a part of his body muscles when rotating pedals in a direction and another part of his body muscles when rotating pedals in an opposite to the first direction, thus resulting to a more effective body exercise . As regards children's bicycle becomes more useful , more pleasant with more motion and skillful performances whilst the bicycle maintains a motion transmission belonging to prior art .

According to one aspect of the present invention the bicycle motion transmission system consists of a pedals axle which is rotatably fitted in ball bearings ; a sprocket wheel fitted on the pedal axle by means of a one-way mechanism locking the sprocket wheel to the pedal axle for rotation with the pedal axle in a first direction ; a first gearwheel fitted to the pedal axle by means of a second one-way mechanism locking the first gearwheel to the pedal axle for rotation with the pedal axle in a direction opposite to the first direction ; pedals fitted on the ends of the pedal axle ; a ring having internal teeth and fixed to the sprocket wheel ; a second rotatable axle with second and third gearwheels fixed to the second axle ; the second axle being movable in a second ring from a first position where said second gearwheel engages the first gearwheel and the third gearwheel engages the ring with internal teeth , to a second position where the second and third gearwheels are not in engagement with the first gearwheel and the ring with internal teeth respectively , whereby with the second axle in the first position , the sprocket wheel rotates in the first direction when the pedal axle is rotated in the first direction and when the pedal axle is rotated in a direction opposite to the first direction .

According to a second aspect of the invention there is provided a bicycle motion transmission consisting of a pedal axle, which is rotatably fitted in ball bearings; the pedal axle having positions for mounting pedals; first and second bevel gearwheels fitted on the pedal axle by means of first and second bevel gearwheel one-way mechanisms respectively, whereby the first bevel gearwheel one-way mechanism locks the first bevel-gear wheel for rotation with the pedal axle in a first direction, and the second bevel gearwheel one-way mechanisms locks the second bevel-gear wheel for rotation with the pedal axle in a direction opposite to the first direction; a bevel pinion fixed on a bevel pinion axle perpendicular to the pedal axle, the bevel pinion axle being rotatably fitted in a ring permitting the bevel pinion axle to move in an out of engagement with the bevel gearwheels; a sprocket wheel fixed to the first bevel gearwheel, whereby with the bevel pinion in engagement with the bevel gear wheels, the sprocket wheel rotates in the first direction when the pedal axle is rotated in the first direction and when the pedal axle is rotated in a direction opposite to the first direction.

An application of the invention is described below with reference to drawings explaining a special materialization only , where :
FIG. 1 shows a section of a bicycle motion transmission system and FIG. 2 shows a side view of a bicycle motion transmission system .
Figure 3 shows a bicycle motion transmission according to the second aspect of the invention.

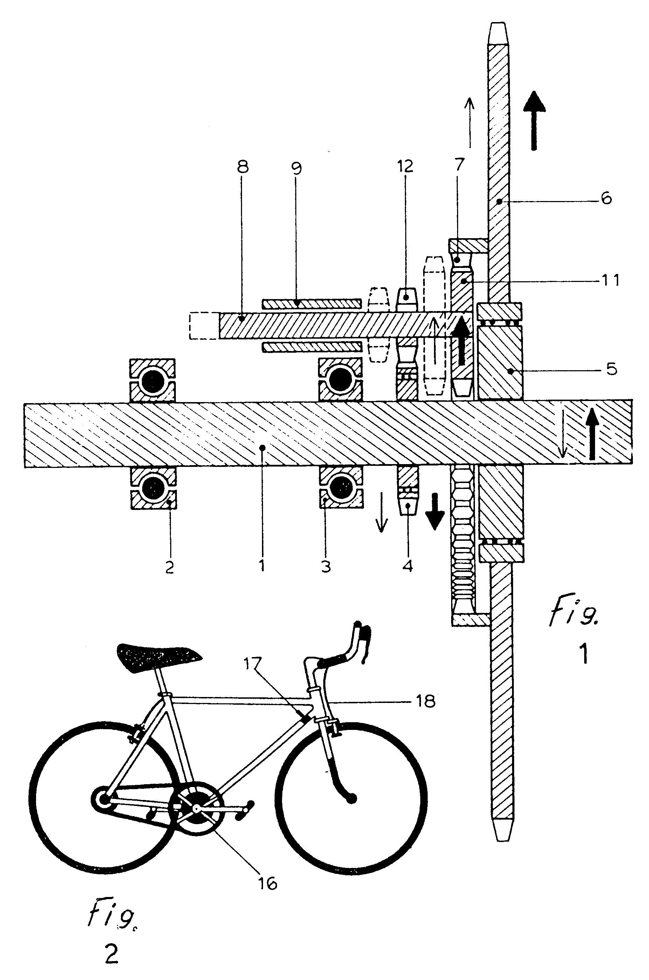

Figures 1 and 2 show the pedal axle (1) which fitted to the ball bearings (2,3) may be rotated . A gearwheel (4) is mounted on the pedal axle (1) by means of a one-way mechanism. A sprocket wheel (6) having a one-way mechanism (5) is fitted on the pedal axle (1) . At the ends (14,15) of the pedal axle (1) the pedals are fitted . A ring (7) having internal teeth is fixed on the sprocket wheel (6) . An axle (8) that rotates and may be moved either to the right or to the left in the ring (9) . Gearwheels (11,12) are fixed on the axle (8) and correspond to positions (10,13) ,when the axle (8) is moved to the left by the control (17) .

The pedal axle does not transmit motion straight to the sprocket wheel ,but through components giving it the possiblity to transmit the motion to the sprocket wheel ,sometimes parallely and sometimes reversely according to cyclist's desire .

According to the above mentioned Figures 1 and 2 , when the pedal axle (1) is rotated forward , the one way mechanism (5) locks the pedal axle (1) with the sprocket wheel (6) ,so that the pedal axle (1) transmits the motion through the one-way mechanism (5) to the sprocket wheel (6) and they both rotate parallely . Parallely also rotates and the ring with the internal teeth (7) which transmits the motion to the gearwheel (11), the axle (8) and the gear (I2) ,which rotates reversely the gearwheel (4) that does not lock together with the pedal axle (1) , when it rotates forwards . When we rotate the pedal axle backwards the gearwheel (4) locks with the pedal axle (1) and rotates the gearwheel (12) reversely ,the axle (8) and the gearwheel (11) transmiting the motion to the ring (7) and the sprocket wheel (6) , the one-way mechanism (5) of which does not lock with the pedal axle (1) when this rotates backwards . Whenever we wish the bicycle to operate with the known conventional way we displace the axle (8) with the control (17) , thus the arrangement of the componets alters and the gearwheels (12,11) move to positions (10,13) , that is they go out of operation . Now the pedal axle (1) is rotated forward and the one-way mechanism (5) locks the pedal axle (1) with the sprocket wheel (6) and they move parallely without the existance of continuity of motion to the gearwheel (11) . However ,by rotating the pedal axle (1) backwards the one-way mechanism (5) does not lock this axle with the sprocket wheel (6) and thus it rotates freely backwards , as happens with the conventional type bicycles .

The size of the gears of the system is in proportional relation with the number of turns that we wish the sprocket wheel to have , when the axis of pedals rotates backwards . On the example of Figure 1 when the axis of pedals is rotated backwards once the sprocket wheel (6) will rotate forwards approximately once .

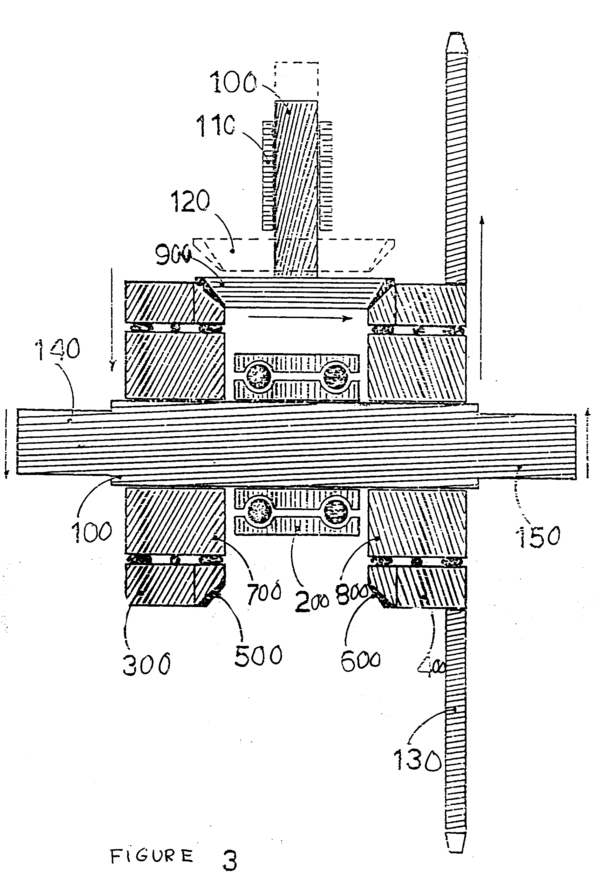

The bicycle motion transmission according to the second aspect of the invention is shown in Figure 3. The pedal axle (100) which being fitted on the ball bearings (200) may be rotated . The one-way mechanisms (300,400) bring on their fronts bevel gear wheels (500,600) and are fitted on the axle (1) by means of said one-way mechanisms . A bevel pinion (900) is fixed on the axis (100) and may be rotated in the ring (110) , that allows it to move to position (120) . A sprocket wheel (130) is fixed on the moving part of the one-way mechanism (400) and the pedals fit in positions (140,150) .

For the operation of this transmission ,when we rotate the pedal axle (100) forwards , the one-way mechanism (400) locks the axle (100) with the sprocket wheel (130) and the bevel gear wheel (600) rotates the bevel pinion (900) forwards, which in turn rotates the bevel gear wheel (500) backwards , which rotates freely because when the axle 100 rotates forwards the one-way mechanism (300) does not lock . When the axle (1) rotates backwards the one- way mechanism (300) locks with the axle (100) and with the bevel gear wheel (500) rotates the bevel pinion (900) which in turn rotates the bevel gear wheel (600) and the sprocket wheel (130) forwards .

Whether the rotating pedal axle (100) moves forwards or it moves backwards , the sprocket wheel (130) rotates forwards .

When we move the bevel pinion (900) at position (120) and rotate the pedal axle (100) forward, the one-way mechanism (400) locks and rotates with it the sprocket wheel (130) , whilst when we rotate the pedal axle backwards ,the one-way mechanism (400) does not lock and rotates freely .

## Claims

1. Bicycle motion transmission consisting of a pedal axle (1) which is rotatably fitted in ball bearings (2, 3); a sprocket wheel (6) fitted on the pedal axle (1) by means of a one-way mechanism (5) locking the sprocket wheel (6) to the pedal axle for rotation with the pedal axle in a first direction; a first gearwheel (4) fitted to the pedal axle (1) by means of a second one-way mechanism locking the first gearwheel (4) to the pedal axle (1) for rotation with the pedal axle (1) in a direction opposite to the first direction; pedals fitted on the ends of the pedal axle (1); a ring having internal teeth (7) and fixed to the sprocket wheel (6); a second rotatable axle (8) with second (12) and third (11) gearwheels fixed to the second axle (8); the second axle (8) being movable in a second ring (9) from a first position where said second gearwheel (12) engages the first gearwheel (4) and the third gearwheel (11) engages the ring with internal teeth (7), to a second position where the second (12) and third (11) gearwheels are not in engagement with the first gearwheel (4) and the ring with internal teeth (7) respectively, whereby with the second axle (8) in the first position, the sprocket wheel (6) rotates in the first direction when the pedal axle (1) is rotated in the first direction and when the pedal axle (1) is rotated in a direction opposite to the first direction.

2. Bicycle motion transmission consisting of a pedal axle, which is rotatably fitted in ball bearings; the pedal axle having positions for mounting pedals; first and second bevel gearwheels fitted on the pedal axle by means of first and second bevel gearwheel one-way mechanisms respectively, whereby the first bevel gearwheel one-way mechanism locks the first bevel-gear wheel for rotation with the pedal axle in a first direction, and the second bevel gearwheel one-way mechanisms locks the second bevel-gear wheel for rotation with the pedal axle in a direction opposite to the first direction; a bevel pinion fixed on a bevel pinion axle perpendicular to the pedal axle, the bevel pinion axle being rotatably fitted in a ring permitting the bevel pinion axle to move in an out of engagement with the bevel gearwheels; a sprocket wheel fixed to the first bevel gearwheel, whereby with the bevel pinion in engagement with the bevel gear wheels, the sprocket wheel rotates in the first direction when the pedal axle is rotated in the first direction and when the pedal axle is rotated in a direction opposite to the first direction.

## Patentansprüche

1. Ueberrtragungssystem fuer Fahrraeder, das aus einer Pedalachse (1) besteht, die drehfoermig an ein Kuggelager (2,3) angepasst ist; einem Ketterrad (6), das an die Pedalachse (1) mittels eines (6) an die Pedalachse schliesst, damit sich die Pedalachse nur in eine Richtung dreht; einem ersten Zahnard (4), an die Pedalachse (1) mittels eines zweiten Richtungsmechaninsmus angepasst, der das erste Zahnrad (4), an die Pedalachse (1) schliesst, damit sich die Pedalachse (1) in die entgegengesetzte Richtung dreht; Pedalen, die an die Enden der Pedalachse (1) angepasst sind; einem Ring (7), der an der Innenseite gezaehnt und an das Kettenrad (6) angebracht ist; einer zweiten Frehachse (8) mit zweitem (12) und drittem (11) Zahnrad an der zweiten Drehachse (8) ; die zweite Achse (8) bewegt sich in einem zweiten Ring (9) von einem ersten Punkt an, wo das erwaehnte zweite Zahnrad (12) sich mit dem ersten Zahnrad (4) triffit und das zweite Zahnrad (12) den Ring mit der Innenzaehnung (7), von einem zweiten Punkt an, wo das zweite (12) und dritte (11) Zahnrad nicht mit dem ersten (4) verbunden sind und dem entsprechenden Ring mit Innenzaehnung (7), und von dem aus, mit der zweiten Achse (8) in erster Stellung, sich das Ketterad (6) in die erste Richtung drecht und ebenfalls, wenn sich die Pedalachse (1) in eine zur ersten entgegengesetzten Richtung dreht.

2. Uebersetzungssystem fuer Fahrraeder, das aus einer Achse besteht, die drehweise an ein Kugellager angepasst ist ; einer Pedalachse, die Anpassungsstellen fuer die Pedalachat ; erste und zweite Zahnradgetriebe, die an die Pedalachse angebracht sind mit Hilfe des ersten und zweiten Zahnradgetriebemechanismus, jeweils einer Richtung entsprechend, wobei der erste Zahnradgetriebemechanismus einer Richtung das erste Zahnradgetriebe verschliesst, damit sich die Pedalachse in die erste Richtung dreht und der zweite
Zahnradgetriebemechanismus das zweite Zahnradgetriebe fuer eine Drehrichtung verschliesst, damit sich die Pedalachse in eine zur ersten entgegengesetzten Richtung drecht; einem seitlichen Raedchen, an einer Achse fuer das seitliche Raedchen angebracht, die senkrecht zur Pedalachse steht, die Achse des seitlichen Raedchens ist drehwizese an einem Ring angebracht, der der seitlichen erlaubt, sich sowohl in Verbindung mit den Zahnradgetrieben als auch ohne diese Verbindung zu bewegen; einem Kettenrad, das am ersten Zahnradgetriebe mit dem seitlichen Raedchen das Kettenrad in die erste Richtung dreht und, wenn sich die Pedalachse in die engegengesetzte zur ersten Richtung drecht, das Kettenrad sich ebenfalls in die entgegengessetzte Richtung drecht.

## Revendications

1. Système de transfert de mouvement de bicycle se composant d'un axe pedale (1) qui est revolutionnerement adapté a des roulemans (2,3); une chaîne de roue (6) adapté sur l'axe de pedales avec l'aide d'un mécanisme d'une direction qui ferm à cléf la chaîne de roue (6) à l'axe des pedales pour la révolution avec l'axe des pédales vers une prémière roue aved des dents (4) adaptés sur l'axe des pédales (1) avec l'aide d'un deuxième mècanisme d'une direction qui ferme a clèf la prémière roue à dents (4) sur l'axe des pédales pour une révolution contraire à l'axe des pédales (1) vers une direction contraire à la prémière direction ; des pédales adaptées sur les fins de l'axe des pédal (1) ; un anneau ayant des dentures internes (7) et adapté sur le edalire (6); un deuxième axe tournant (8) avec une deuxième (12) et troisième (11) roues à dents sur le deuxième axe (8); le deuxième axe (8) est mouvant sur un deuxième anneau (9) d'une prémière place où la roue susmentionée à dents (12) implique la prémière roue à dents (4) et la deuxième roue à dents (11) empêtre l'anneau à dents internes (7), dans une deuxième place où la deuxième (12) et troisième (11) roues a dents sont pas en empêtrement avec la prémière roue à dents (4) et l'anneau à dents internes (7) reciproquement, dont avec la deuxième axe (8) à la prémière direction quan l'axe des pédales (1) tourne vers la prémière direction et quand l'axe des pédales (1) tourne vers une direction opposée à la prémière direction.

2. Systême de transfert de mouvement de bicyclette qui se compose d'un axe qui n'est pas adapté révolutionnairement à des roulemans; l'axe des pédales qui à des positions pour l'adaptation des pédales; prémière et deuxième agrès de roues à dents adpatés sur l'axe des pédales avec l'aide du prémièr et deuxième mecanismes d'agrès de roues à dents d'une direction reciproquement, dont le prémièr mécanisme d'agrès de roue à dents d'une direction ferme à clèf le prémièr agrès de roue à dents pour la révolution avec l'axe des pédales vers une prémière direction, et le deuxième mécanisme d'agrès de roue à dents d'une direction ferme à clèf le deuxième agres de la roue à dents pour la révolution avec l'axe des pédales vers une direction opposée à la prémière direction une roulette oblique adaptée sur un axe de roulette oblique vertical sur l'axe des pédales, l'axe de la roulette oblique est adapté revolutionnairement sur un anneau qui permet à l'axe de la roulette oblique de se mouvoir en et hors d'empêtrement avec les agrès des roues à dents ;un pédalier adapté sur le prémièr agrès de la roue à dents, dont avec la roulette oblique en empêtrement avec les agrès des roues à dents, le pédalier tourne vers la prémière direction et quand l'axe des pédales se tourne vers une direction opposée à la prémière direction.
